# EUROPEAN PATENT APPLICATION

(11) **EP 1 014 729 A2**
(43) Date of publication of application: **28.06.2000**
(21) Application number: 99125295.8
(22) Date of filing: 18.12.1999
(51) Int. Cl.: H04N 7/62, H04N 7/26

(54) **Apparatus and method for time stamping using modulo time base and time increment resolution**

(30) Priority: 21.12.1998 JP 36251198
(71) Applicant: MATSUSHITA ELECTRIC INDUSTRIAL CO., LTD., Kadoma-shi, Osaka (JP)
(72) Inventor: Shen, Sheng Mei, Singapore 270007 (SG); Tan, Thiow Keng, Singapore 556114 (SG)
(74) Representative: Eisenführ, Speiser & Partner

(57) **Abstract**

A time stamping apparatus uses modulo time base and time increment resolution for efficiently encoding a local time base for different video/audio sources embedded in the compressed data. The local time base is mainly encoded in two parts: a modulo time base that indicates the specific interval in the reference time base; and a time base increment relative to the reference time. Two forms of time base increment are used to allow for the possibility of different encoding order and displaying order. A resolution for time base increment is introduced here to allow video/audio sources of different frame rates to be encoded and multiplexed into one bitstream. Also, bit saving is also obtained for some of the video frame rates. The parameter of time base increment resolution can be placed in the header of group of video object plane.

## Description

### BACKGROUND OF THE INVENTION

### 1. Field of the Invention

The present invention relates to method and apparatus for time stamping using modulo time base and dynamic time increment resolution. The invention is useful in coded representation of audio and visual material where time stamping of the audio and video is required.

### 2. Description of the Related Art

In the field of video processing, audio and visual data are recorded and then, coded before being stored in a recording medium or before being transmitted through a transmission path. The stored or transmitted data are then decoded and reproduced. In order to reproduce the audio and visual data at the normal speed, it is necessary to make the reproducing speed the same as the recording speed. For this purpose, during the recording and during the coding necessary time data are added. The adding of such time data is called time stamping.

The time stamping is useful because it allows the synchronisation of multiple audio and video streams for presentation. In video coding the time stamp of the video frames can also be used for interpolation purpose as well as for motion compensation for scaling motion vectors according to the frame distance. This invention is particularly useful when the frame rate is not constant and can vary over a wide range within the same sequence.

The idea of time stamping is not new. It has been used successfully in many applications including in the systems layer of MPEG-1 and MPEG-2 standard. However these time code usually requires a large number of bits to represent. For instant in the case of MPEG-1 and MPEG-2 systems the time stamp require 33 bits.

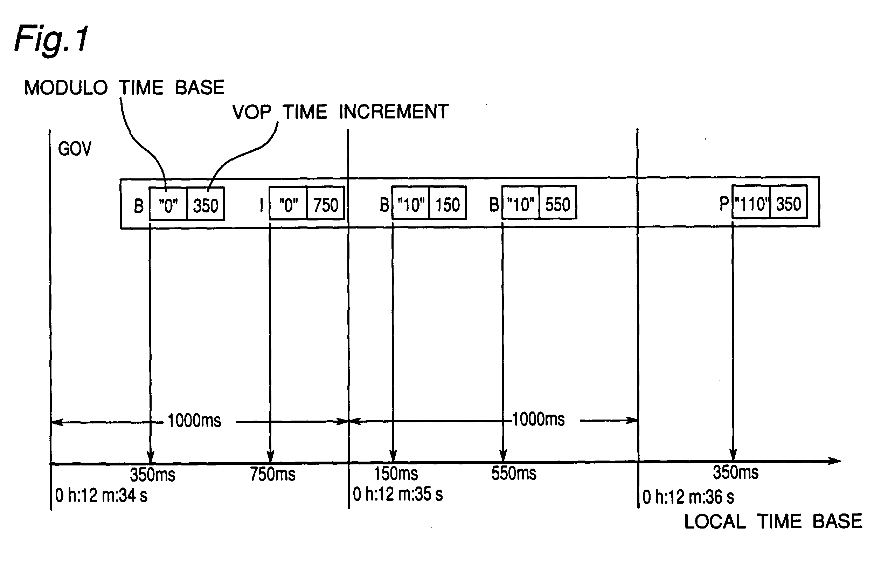

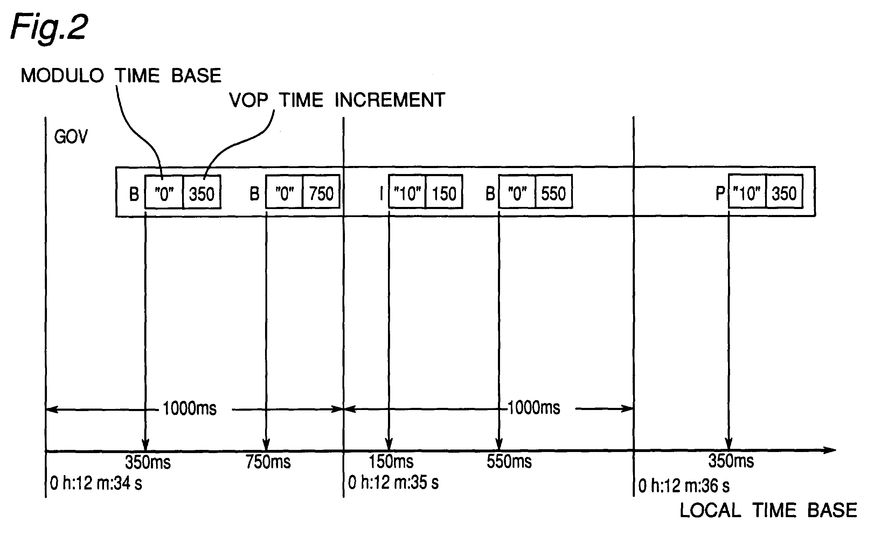

Up to now, in MPEG-4 VM7.1, **modulo_time_base** and **VOP_time_increment** were introduced to represent a local time base together The first, modulo_time_base, consists of group time base that indicates the specific interval in the reference time base and the second, VOP_time_increment, consists of the time base increment relative to the reference time. Figs. 1 and 2 show the concept of the time stamping by using these two parameters, as the prior art of this invention.

As shown in Figs. 1 and 2, **modulo_time_base** represents the local time base at the one second resolution unit (1000 milliseconds). It is represented as a marker transmitted in the VOP header The number of consecutive "1" followed by a "0" indicates the number of seconds has elapsed since the synchronisation point marked by the modulo_time_base of the last displayed I/P-VOPs. There are two exceptions, one for the first I/P-VOP after the GOV header, and the other is for B-VOPs prior (in display order) to the first I-VOP after the GOV header.

For the first I/P-VOP after the GOV header, the modulo_time_base indicates the time relative to the time_code in the GOV header.

For the B-VOPs prior (in display order) to the first I-VOP after the GOV header, the modulo_time_base indicates the time relative to the time_code in the GOV header.

When the bitstream contains B-VOPs, the decoder needs to store two time_base, one is indicated by the last displayed I/P-VOP or the GOV header and the other is indicated by the last decoded I/P-VOP.

As shown in Figs. 1 and 2, **VOP_time_increment** represents the local time base in the units of milliseconds. For I/P and B-VOP this value is the absolute VOP_time_increment from the synchronisation point marked by the modulo_time_base.

In Fig. 1, the first VOP(B-VOP) in display order locates prior to the I-VOP, so its time_base refers to the time_code in the GOV header. The third VOP(B-VOP) locates in the time period 1 second distance from the modulo_time_base indicated by the second VOP(I-VOP), so the modulo_time_base for the third VOP(B-VOP) shall be "10". The fourth VOP(B-VOP) refers to the second VOP(I-VOP), the modulo_time_base for the fourth VOP(B-VOP) shall be "10" The fifth VOP(P-VOP) refers to the second VOP(I-VOP), the modulo_time_base for the fifth VOP(P-VOP) shall be "110".

In Fig. 2, the third VOP(I-VOP) in display order locates in the time period 1 second distance from the time_code in the GOV header, the modulo_time_base for the third VOP(I-VOP) shall be "10". Since the fourth VOP(B-VOP) refers to the third VOP(I-VOP), the modulo_time_base for the fourth VOP(B-VOP) shall be "0".

To produce a picture at a given time (according to the display frame rate), the simplest solution is to use the most recently decoded data of each VOP to be displayed. Another possibility, more complex and for non real time applications, could be to interpolate each VOP from its two occurrences temporally surrounding the needed instant, based on their temporal references.

As it is shown in Figs. 1 and 2, the VOP_time_increment has a resolution of milliseconds. There are various frame rates for different applications in the current industry, such as, 23.976Hz, 24Hz, 25Hz, 29.97Hz, 30Hz, 50Hz, 59.97Hz, 60Hz, etc. For frame rate of 25Hz, the time distance between two frames is 40ms (1000ms/25), and the time stamping technique in the prior art can handle this frame rate. But for the frame rate of 29.97Hz, the time distance between two frames will be 33.3667ms (1000ms/29.97). Based on the time stamping technique in the prior art, the VOP_time_increment cannot represent such number, since the VOP_time increment is in units of milliseconds. If the resolution of the VOP_time _increment is a fixed value, like the one in the prior art, then it would not handle different frame rates.

In applications involving computer graphics or synthetic video sources, there will be many kinds of frame rates to be processed. So the problem to be solved is how to encode the time stamp in an efficient way as well as in a flexible way so that a wide range of frame rates can be represented.

### SUMMARY OF THE INVENTION

Based on the above analysis, the main problem to be solved is to make the resolution of the VOP_time_increment a variable quantity, in order to handle many different kinds of frame rates. This can be solved by introducing a new syntax element called the VOP_time_increment_resolution. This parameter can be placed in the GOV and/or the VOL layer, shown as in Table 1 and Table 2.

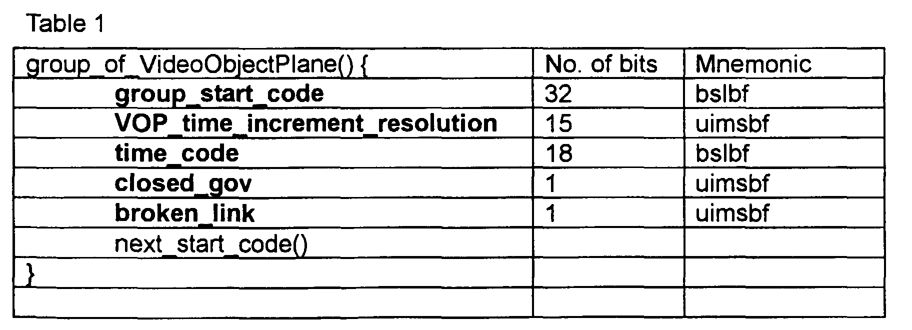

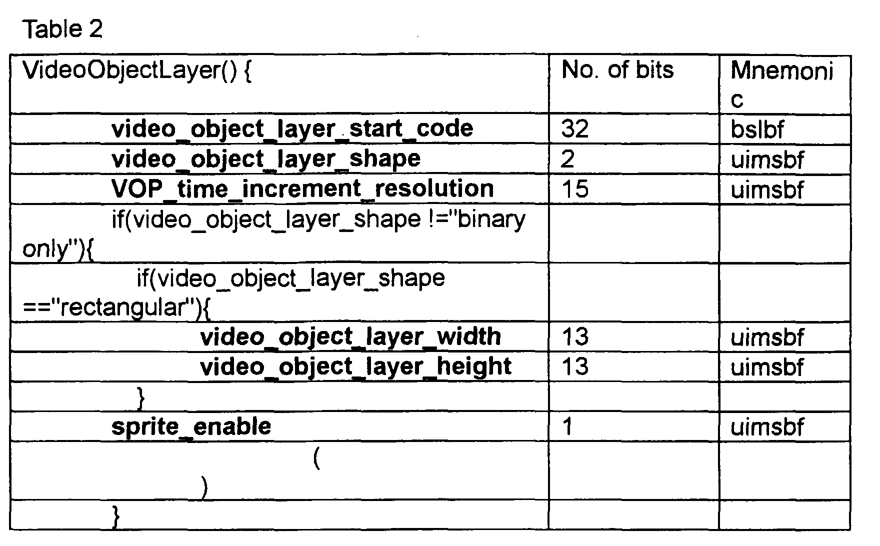

Table 1 shows the syntax of group of video object plane (VOB), and Table 2 shows syntax for VOP_time_increment_resolution in VOL layer.

In Table 1, the group_start_code is the unique code of length of 32bit. It identifies the beginning of a GOV header. Also, the VOP_time_increment_resolution is a 15bit unsigned integer that indicates the resolution of the VOP_time_increment in terms of number of clocks within one modulo time (one second in this case). The value of zero is forbidden.

So, the means of solving this problem is to partition the time stamp into two parts. The first part represents the coarse representation of the time stamp referred to as the modulo time base. And the second part, the VOP time increment represents the time duration between two successive modulo time base. Furthermore to solve the problem of being able to represent a wide range of frame rates, the resolution of the VOP time increment can be dynamically set by the transmission of a flag indicating the total number of clocks between the two successive modulo time base.

The VOP_time_increment_resolution introduced in this invention, together with modulo_time_base and VOP_time_increment, can be operated for any frame rates. The VOP_time_increment_resolution gives the total number of clocks in one modulo time and the VOP_time_increment encodes the number of clocks that have elapsed since the last time code marked by the last modulo_time_base.

The time code of the VOP can be calculated by summing the time code at the current referencing point, the number of seconds elapsed marked by the modulo_time_base and the fractions of second elapsed given by the ratio of the VOP_time_increment and the VOP_time_increment_resolution.
time code of the VOP
   = time_code
   + modulo_time_base
   + VOP_time_increment/VOP_time_increment_resolution

For example, in the above equation, the first term represents the time at a certain reference time point, the second term represents the number of seconds elapsed from the reference time point, and the third term represents the decimal place amount of the second.

The VOP_time_increment_resolution is placed in GOV layer and/or VOL layer to indicate the corresponding resolution of different frame rates for different sources in different Group of Video. Then the VOP_time_increment will represent the frame distance for different resolution by using different number of bits.

### BRIEF DESCRIPTION OF THE DRAWINGS

Fig. 1 is a time chart showing the prior art time stamping method in the encoding process.
Fig. 2 is a time chart showing the prior art time stamping method in the encoding process.
Fig. 3 is a time chart showing a time stamping technique according to the present invention for representing the frame rate of 29.97Hz.
Fig. 4 is a time chart showing a time stamping technique according to the present invention for representing the frame rate of 25Hz.
Fig. 5 is a time chart showing a fundamental operation of time stamping.
Fig. 6 is a block diagram showing a bitstream encoder for encoding of the Time Base according to the present invention.
Fig. 7 is a block diagram showing a bitstream decoder for decoding of the Time Base according to the present invention.
Fig. 8 is a flow chart showing an operation of bitstream encoder of Fig. 6.
Fig. 9 is a block diagram showing one embodiment of VOP time increment resolution encoder shown in Fig. 6.

### DESCRIPTION OF THE PREFERRED EMBODIMENTS

The preferred embodiment of the current invention involves an effective method of encoding the time base for each of the individual video object plane bitstream, a method of dynamically setting resolution for encoding the time base for different video sources.

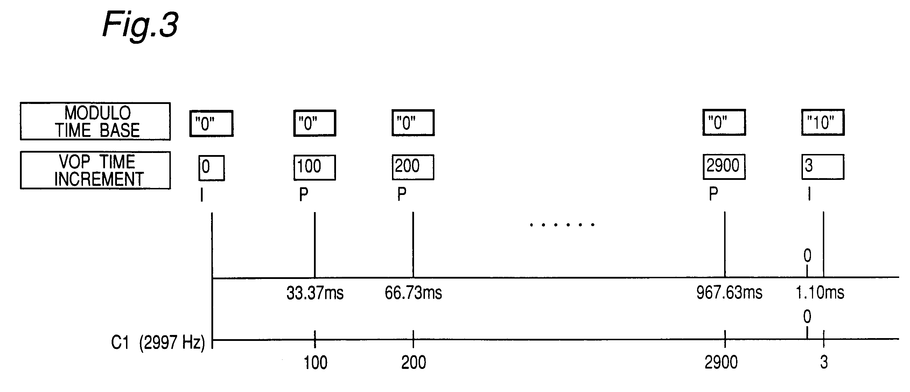

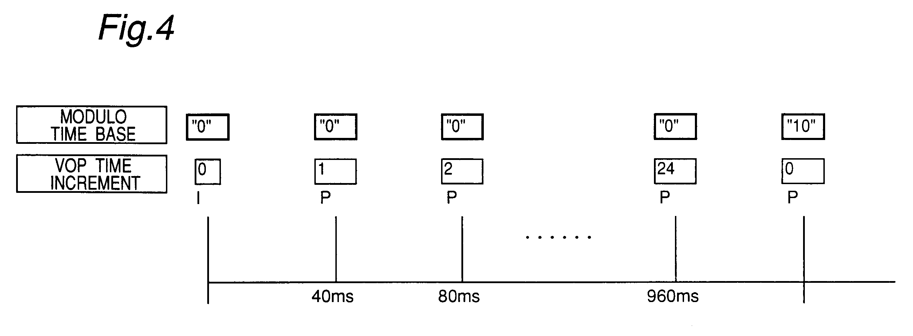

Based on the prior art shown in Figs. 1 and 2, modulo_time_base and VOP_time_increment have the same meaning, except VOP_time_increment in this invention has a variable resolution, which is indicated in VOP_time_increment_resolution in GOP layer Figs. 3 and 4 show the mechanism of representing the time base for different sources with different frame rates.

In Fig. 3, a video source having a frame rate (the number of frames appearing per 1 second) of 29.97Hz is shown. In this case, the VOP_time_increment_resolution (the frame rate multiplied by 10ⁿ (n being a positive integer) to remove the decimal fraction) is 2997. In other words, when the frame rate of the video source is 29.97Hz, that means there will be 29.97 frames appearing per each second. In order to accurately measure one frame period of this video source, it is necessary to use a clock signal which has 2997 clock pulses (simply referred to as clocks) per one second. To count the number of such clocks in each second, a 12-bit data to represent a number between 0 and 2997 is necessary. Such a 12-bit date is placed in the GOV layer, particularly in the third row (VOP_time_increment) in Table 1 or in the VOL layer, particularly in the fourth row (VOP_time_increment) in Table 2, where a 15-bit data, which is unsigned integer, is accommodated. In this case one frame period can be counted by counting 100 clocks. Thus, the time period of 29 frames is equivalent to 2900 clocks. The 30th frame, which is the third P frame shown in Fig. 3, ends when 97 clocks in the first modulo time is counted from the end of 29th frame, plus 3 more clocks in the next modulo time.

In Fig. 4, a video source having a frame rate of 25Hz is shown. In this case, VOP_time_increment_resolution is 25. In order to accurately measure one frame period of this video source, it is necessary to use a clock signal which has 25 clocks per one second. To count the number of such clocks in each second, a 5-bit data to represent a number between 0 and 25 is necessary. Such a 5-bit data is placed in the GOV layer and/or VOL layer in a similar manner as described above. Thus, VOP_time_increment only requires 5-bit data to represent a number between 0 and 25. In this case, one frame period is just one clock period, which corresponds to 40ms. The 5-bit data is a very small size data compared with 10-bit data used in the prior art.

So this scheme is very flexible and efficient to encode the time base for different kinds of video sources with different frame rates.

The modulo_time_base and the VOP_time_increment are placed in the VOP layer, shown as in Table 3.

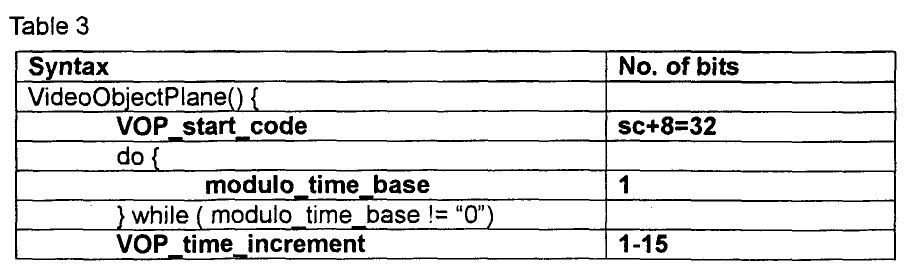

Table 3 shows a s**yntax for modulo_time_base and VOP_time_increment.**

In this invention, **VOP_time_increment** represents the absolute VOP_time_increment from the synchronization point marked by the modulo_time_base and measured by the number of clocks. It can take a value in the range (between 0 and VOP_time_increment_resolution). The number of bits representing this value is calculated as the minimum number of bits required to represent the above range. The local time base in units of seconds is obtained by dividing this value by the VOP_time_increment_resolution.

Next, the basic operation of the time stamping is described.

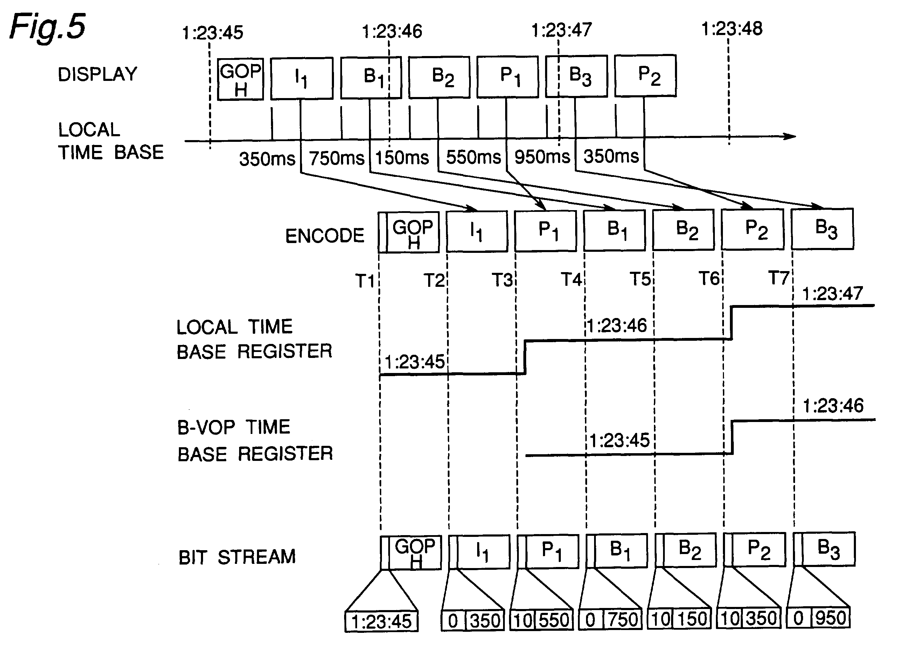

Referring to Fig. 5, an example of the steps for encoding the compressed data into bitstream data is shown. As shown in the top row in Fig. 5, the compressed video data VOPs are aligned in the display order, I1, B1, B2, P1, B3, P3 with a GOP (group of pictures) header inserted at the beginning of group of VOPs. While being displayed, the local time, at which the display is effected, is measured for each VOP using the local time clock. For example, the first frame (I1-VOP) is displayed at 1 hour 23 minute 45 second 350 millisecond (1: 23 : 45 : 350) counted from the very beginning of the video data; the second frame (B1-VOP) is displayed at 1: 23 : 45 : 750 ; the third frame (B2-VOP) is displayed at 1 : 23 : 46 : 150 ; and so on.

For encoding the frames, it is necessary to insert the display time data to each frame. The insertion of the full time data including hour, minute, second and millisecond occupies a certain data space in the header portion of each frame. The aim of the present invention is to reduce such a data space and to simplify the time data to be inserted in each frame (VOP).

Each of the VOPs shown in the first row in Fig. 5 is stored with the display time data of millisecond at the VOP time increment area. Each of the VOPs in the first row is also stored temporarily with the display time data of hour, minute and second. The GOP header is stored with the display data of hour, minute and second for the first VOP (I1-VOP).

As shown in the second row in Fig. 5, the VOPs are delayed by a predetermined time using a buffer (not shown). When the VOPs are produced from the buffer, the order of the VOPs are changed according to the bi-directional prediction rule such that the bi-directional VOP, i.e., B-VOP, should be positioned after the P-VOP to which the B-VOP references. Thus, the VOPs are aligned in the order of I1, P1, B1, B2, P2, B3.

As shown in the third row in Fig. 5, at time T1, i.e., when the GOP header is being encoded, the local time base register stores the hour, minute, second data as stored in the GOP header. In the example shown in Fig. 5, the local time base register stores 1: 23 : 45. Then, before time T2, the bitstream data for the GOP header is obtained with the hour, minute, second data being inserted as shown at the bottom row in Fig. 5.

Then, at time T2, the first VOP (I1-VOP) is taken up. The time code comparator compares the time (hour, minute, second) stored in the local time base register with the time (hour, minute, second) temporarily stored in the first VOP (I1-VOP). According to the example, the result of the comparison is the same. Thus, the comparator produces "0" indicating that the first VOP (I1-VOP) occurs in the same second as the second being held in the local time base register The result "0" as produced from the comparator is added to the first VOP (I1-VOP) at the modulo time base area. At the same time, the hour, minute and second data temporarily stored in the first VOP (I1-VOP) is eliminated. Thus, before time T3, the bitstream data for the first VOP (I1-VOP) is obtained with "0', inserted in the modulo time base area and "350" inserted in the VOP time increment area.

Then, at time T3, the second VOP (P1-VOP) is taken up. The time code comparator compares the time (hour, minute, second) stored in the local time base register with the time (hour, minute, second) temporarily stored in the second VOP (P1-VOP). According to the example, the result of the comparison is such that the time temporarily stored in the second VOP (P1-VOP) is one second greater than the time stored in local time base register Thus, the comparator produces "10" indicating that the second VOP (P1-VOP) occurs in the next one second to the second being held in the local time base register If the second VOP (P1-VOP) occurs in the next-next second to the second being held in the local time base register, the comparator will produce "110".

After time T3, the B-VOP time base register is set to the time equal to the time carried in the local time base register immediately before time T3. In the example, the B-VOP time base register is set to 1:23:45. Also, after time T3, the local time base register is incremented to the time equal to the time temporarily stored in the second VOP (P1-VOP). Thus, in the example, the local time base register is incremented to 1:23:46.

The result "10", as produced from the comparator is added to the second VOP (P1-VOP) at the modulo time base area. At the same time, the hour, minute and second data temporarily stored in the second VOP (P1-VOP) is eliminated. Thus, before time T4, the bitstream data for the second VOP (P1-VOP) is obtained with "10" inserted in the modulo time base area and "550" inserted in the VOP time increment area.

Then, at time T4, the third VOP (B1-VOP) is taken up. The time code comparator compares the time (hour, minute, second) stored in the B-VOP time base register with the time (hour, minute, second) temporarily stored in the third VOP (B1-VOP). According to the example, the result of the comparison is the same. Thus, the comparator produces "0" indicating that the third VOP (B1-VOP) occurs in the same second as the second being held in the B-VOP time base register. The result "0" as produced from the comparator is added to the third VOP (B1-VOP) at the modulo time base area. At the same time, the hour, minute and second data temporarily stored in the first VOP (I1-VOP) is eliminated. Thus, before time T5, the bitstream data for the third VOP (B1-VOP) is obtained with "0" inserted in the modulo time base area and "750" inserted in the VOP time increment area.

Then, at time T5, the fourth VOP (B2-VOP) is taken up. The time code comparator compares the time (hour, minute, second) stored in the B-VOP time base register with the time (hour, minute, second) temporarily stored in the fourth VOP (B2-VOP). According to the example, the result of the comparison is such that the time temporarily stored in the fourth VOP (B2-VOP) is one second greater than the time stored in B-VOP time base register Thus, the comparator produces "10" indicating that the fourth VOP (B2-VOP) occurs in the next one second to the second being held in the B-VOP time base register

During the processing of the B type VOP, neither the local time base register nor the B-VOP time base register is incremented regardless of whatever result the comparator produces.

The result "10" as produced from the comparator is added to the fourth VOP (B2-VOP) at the modulo time base area. At the same time, the hour minute and second data temporarily stored in the fourth VOP (B2-VOP) is eliminated. Thus, before time T6, the bitstream data for the fourth VOP (B2-VOP) is obtained with "10" inserted in the modulo time base area and "150" inserted in the VOP time increment area.

Then, at time T6, the fifth VOP (P2-VOP) is taken up. The time code comparator compares the time (hour, minute, second) stored in the local time base register with the time (hour, minute, second) temporarily stored in the fifth VOP (P2-VOP). According to the example, the result of the comparison is such that the time temporarily stored in the fifth VOP (P2-VOP) is one second greater than the time stored in local time base register Thus, the comparator produces "10" indicating that the fifth VOP (P2-VOP) occurs in the next one second to the second being held in the local time base register.

After time T6, the B-VOP time base register is incremented to the time equal to the time carried in the local time base register immediately before time T6. In the example, the B-VOP time base register is incremented to 1:23:46. Also, after time T6, the local time base register is incremented to the time equal to the time temporarily stored in the fifth VOP (P2-VOP). Thus, in the example, the local time base register is incremented to 1:23:47.

The result "10" as produced from the comparator is added to the fifth VOP (P2-VOP) at the modulo time base area. At the same time, the hour, minute and second data temporarily stored in the fifth VOP (P2-VOP) is eliminated. Thus, before time T4, the bitstream data for the fifth VOP (P2-VOP) is obtained with "10" inserted in the modulo time base area and "350" inserted in the VOP time increment area.

Thereafter, a similar operation is carried out for forming bitstream data for the following VOPs.

For decoding the bitstream data, an operation opposite to the above is carried out. First, the time (hour, minute, second) carried in the GOP header is read. The read time is stored in the local time base register.

Upon receipt of the I type or P type VOP, i.e., other then the B type VOP, the data stored in the modulo time base area is read. If the read data is "0',, i.e., without any 1s in front of 0, no change is made in the local time base register, and also no change is made in the B-VOP time base register If the read data is "10", the time stored in the local time base register is incremented by one second. If the read data is "110", the time stored in the local time base register is incremented by two seconds. In this manner, the number of seconds which should be incremented is determined by the number of 1s inserted in front of 0. Also, when the read data is "10" or "110", the B-VOP time base register, which is a memory, copies the time the local time base register had carried just before the most recent increment. Then, the time (hour, minute, second) carried in the local time base register is combined with the time (millisecond) carried in the VOP time increment area to establish a specific time at which the I type or P type VOP should occur.

Upon receipt of the B type VOP, the data stored in the modulo time base area is read. If the read data is "0", the time (hour, minute, second) carried in the B-VOP time base register is combined with the time (millisecond) carried in the VOP time increment area to establish a specific time at which the B type VOP should occur. If the read data is "10", the time (hour, minute, second) carried in the B-VOP time base register is added one second, and then the added result time is combined with the time (millisecond) carried in the VOP time increment area to establish a specific time at which the B type VOP should occur. If the read data is "110", the time (hour, minute, second) carried in the B-VOP time base register is added two seconds, and then the added result time is combined with the time (millisecond) carried in the VOP time increment area to establish a specific time at which the B type VOP should occur.

The description related to Fig. 5 is already given in the present inventor's prior PCT application PCT/JP97/02319 which is herein incorporated by reference.

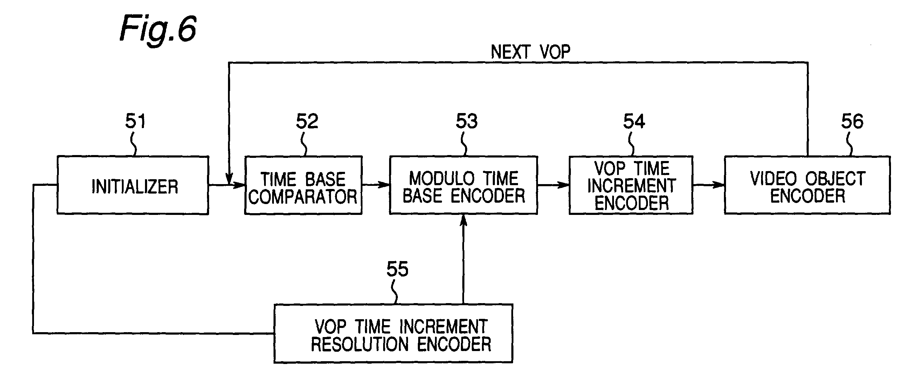

Fig. 6 shows the general block diagram for the operations of the bitstream encoder for encoding of the time base. When the bitstream encoder starts, an initializer 51 initializes the local time base register to the initial value of the time code. The same time code value is encoded into bitstream. At the start of the encoding of the next I-VOP the time code comparator 52 compares the presentation time of the I-VOP against the local time base register. The results is passed to the modulo time base encoder 53. The modulo time base encoder 53 will insert into the bitstream the required number of "1" equivalent to the number of modulo time base increment that has elapsed. This is then followed by the symbol "0" to signal the end of the modulo time base code. The local time base register is updated to the current modulo time base. The processing then proceeds to the VOP time base increment encoder 54, where the remainder of the presentation time code of the I-VOP is encoded.

Based on different video sources with different frame rates, VOP time increment resolution encoder 55 will place a number with 15 bits to indicate the resolution of the VOP_time_increment in terms of number of clocks within one modulo time, for example, 2997 for the frame rate of 29.97Hz. Based on the information provided by VOP time increment resolution encoder 55, the number of bits which are needed for VOP time increment encoder 54 to represent the maximum number of clocks in one modulo time is defined. For example, 12 bits are needed for the maximum number of 2997.

The process then repeats with the next encoded video object plane which is the P-VOP. The time code comparator 52 compares the presentation time of the P-VOP against the local time base register. The result is passed to the modulo time base encoder 53. The modulo time base encoder 53 will insert the required number of "1" equivalent to the number of modulo time base increment that has elapsed. This is then followed by the symbol "0" to signal the end of the modulo time base code. The B-VOP time base register is set to the value of the local time base register and the local time base register is updated to the current modulo time base. The processing then proceeds to the VOP time base increment encoder 54, where the remainder of the presentation time code of the P-VOP is encoded.

The process then repeats with the next encoded video object plane which is the B-VOP. The time code comparator 52 compares the presentation time of the B-VOP against the local time base register. The result is passed to the modulo time base encoder 53. The modulo time base encoder 53 will insert the required number of "1" equivalent to the number of modulo time base increment that has elapsed. This is then followed by the symbol "0" to signal the end of the modulo time base code. Both the B-VOP time base register and the local time base register are not changed after the processing of the B-VOP. The processing then proceeds to the VOP time base increment encoder 54, where the remainder of the presentation time code of the B-VOP is encoded.

The local time base register is reset at the next I-VOP which marks the beginning of the next group of VOP. The resolution given in VOP time increment resolution encoder 55 will be the same within the same group of VOP.

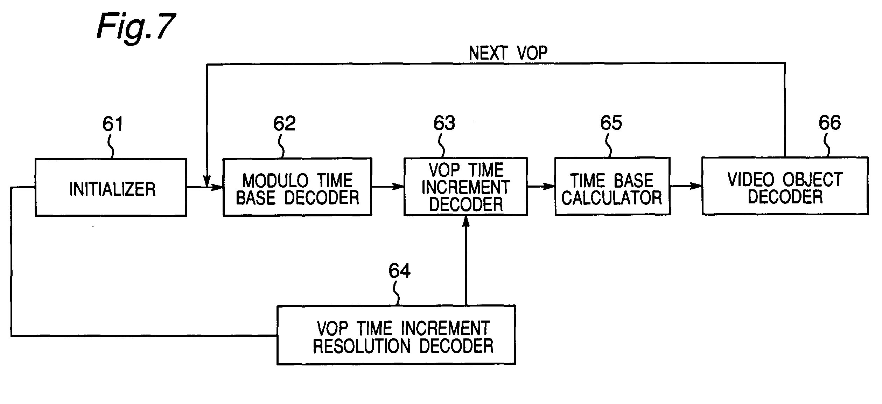

Fig. 7 shows the general block diagram for the implementation of the decoder for the modulo time base, VOP time increment resolution, and VOP time increment to recover the presentation time stamp. The decoding order is the same as the encoding order where the I-VOP is decoded followed by the P-VOP before the B-VOP.

The processing begins by an initializer 61 in which the local time base register is set to the value of the time code decoded from the bitstream. The processing then proceeds the modulo time base decoder 62, where the modulo time base increment is decoded. The total number of modulo time base increment decoded is given by the number of "1" decoded before the symbol "0". A VOP time increment resolution decoder 64 decodes the resolution from the bitstream in the GOV header, to pass to the VOP time increment decoder 63. Then the VOP time increment decoder 63 can obtain the corresponding time increment for the current VOP by decoding the number represented by VOP_time_increment and being divided by VOP_time_increment_resolution. In the time base calculator 65, the presentation time of the I-VOP is recovered. The total decoded modulo time base increment value is added to the local time base register. The VOP time base increment divided by VOP time increment resolution is then added to the local time base register to obtain the presentation time of I-VOP, i.e.,
the presentation time of the I-VOP
   = time_code
   + modulo_time_base
   + VOP_time_increment/VOP_time_increment_resolution

The process then goes to the Video object decoder 66, where the video object is decoded.

For the P-VOP, the process repeats in the modulo time base decoder 62, where the modulo time base increment is decoded. The total number of modulo time base increment decoded is given by the number of "1" decoded before the symbol "0". The VOP time increment resolution decoder 64 decodes the resolution from the bitstream in the GOV header, to pass to the VOP time increment decoder 63. Then the VOP time increment decoder 63 can obtain the corresponding time increment for the current VOP by decoding the number represented by VOP_time_increment and being divided by VOP_time_increment_resolution. In the time base calculator 65, the presentation time of the P-VOP is recovered. The B-VOP modulo time base register is set to the value in the local time base register. The total decoded modulo time base increment value is added to the local time base register. The VOP time base increment divided by VOP time increment resolution is then added to the local time base register to obtain the presentation time of P-VOP, i.e.,
the presentation time of the P-VOP
   = time_code
   + modulo_time_base
   + VOP_time_increment/VOP_time_ increment_resolution

The process the goes to the Video object decoder 66, where the video object is decoded.

For the B-VOP, the process repeats in the modulo time base decoder 62, where the modulo time base increment is decoded. The total number of modulo time base increment decoded is given by the number of "1" decoded before the symbol "0". The VOP time increment resolution decoder 64 decodes the resolution from the bitstream in the GOV header, to pass to the VOP time increment decoder 63. Then the VOP time increment decoder 63 obtains the corresponding time increment for the current VOP by decoding the number represented by VOP_time_increment and being divided by VOP_time_increment_resolution. In the time base calculator 65, the presentation time of the B-VOP is recovered. The total decoded modulo time base increment value and the VOP time base increment divided by VOP_time_increment_resolution is added to the B-VOP time base register to obtain the presentation time of the B-VOP, i.e.,
the presentation time of the B-VOP
   = time_code
   + modulo_time_base
   + VOP_time_increment/VOP_time_increment_resolution

Both the B-VOP modulo time base register and the local time base register are left unchanged. The process then goes to the Video object decoder 66, where the video object is decoded.

The local time base register is reset at the next I-VOP which marks the beginning of the next group of VOP. The VOP time increment resolution decoder 64 will decode the resolution for VOP time increment for next group of VOP.

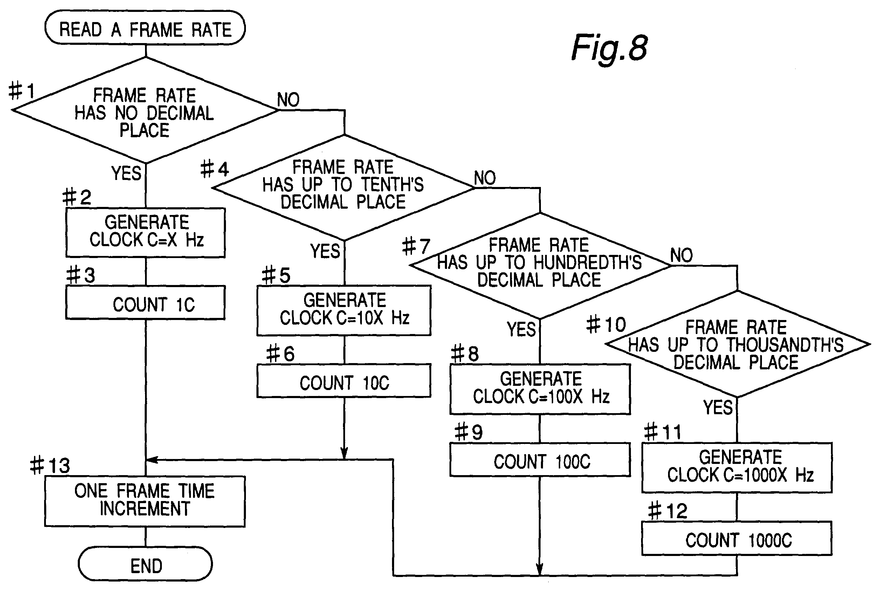

Fig. 8 is a flow chart showing the operation of the encoder of Fig. 6, particularly VOP time increment encoder 54, VOP time increment resolution encoder 55. It is assumed that the frame rate X of the received video data is one of different frame rates, such as 23.976Hz, 24Hz, 25Hz, 29.97Hz, 30Hz, 50Hz, 59.97Hz, 60Hz. At first, the frame rate is detected.

At step #1, it is detected whether or not the frame rate has no decimal place. If the frame rate has no decimal place, such as when the frame rate X is any one of 24 Hz, 25 Hz, 30 Hz, 50 Hz and 60 Hz, the program goes to step #2 to generate a clock with a frequency C which is equal to the frame rate X. At step #3, one clock is counted, and at next step #13 a frame counter is increment by 1. The counting of one clock in step #3 is equal to the counting of one frame period.

At step #4, it is detected whether or not the frame rate X has up to tenth's decimal place. If the frame rate X has up to tenth's decimal place, the program goes to step #5 to generate a clock with a frequency C which is equal to ten times the frame rate X. At step #6, ten clocks are counted, and at next step #13 a frame counter is increment by 1. The counting of ten clocks in step #6 is equal to the counting of one frame period.

At step #7, it is detected whether or not the frame rate X has up to hundredth's decimal place. If the frame rate X has up to hundredth's decimal place, such as when the frame rate X is either 29.97 Hz or 59.97 Hz, the program goes to step #8 to generate a clock with a frequency C which is equal to one hundred times the frame rate X. At step #9, one hundred clocks are counted, and at next step #13 a frame counter is increment by 1. The counting of one hundred clocks in step #9 is equal to the counting of one frame period.

At step #10, it is detected whether or not the frame rate X has up to thousandth's decimal place. If the frame rate X has up to thousandth's decimal place, such as when the frame rate X is 23.976 Hz, the program goes to step #11 to generate a clock with a frequency C which is equal to one thousand times the frame rate X. At step #12, one thousand clocks are counted, and at next step #13 a frame counter is increment by 1. The counting of one thousand clocks in step #12 is equal to the counting of one frame period.

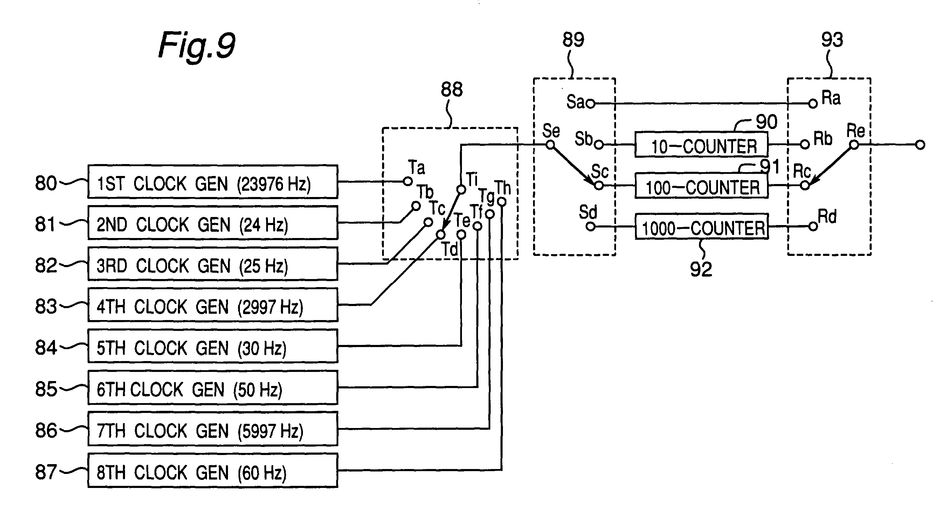

Referring to Fig. 9, an example of the VOP time increment resolution encoder 55 is shown. First, second, third, fourth, fifth, sixth, seventh and eighth clock generators 80, 81, 82, 83, 84, 85, 86 and 87 produce clocks respectively having frequencies 23976 Hz, 24 Hz, 25 Hz, 2997 Hz, 30 Hz, 50 Hz, 5997 Hz and 60 Hz. Clock generators 80, 81, 82, 83, 84, 85, 86 and 87 are connected to terminals Ta, Tb, Tc, Td, Te, Tf, Tg and Th, respectively, of a first switch 88. Terminal Ti of the switch 88 is connected to a terminal Se of a second switch 89. The second switch 89 has a terminal Sa connected to a terminal Ra of a third switch 93. The second switch 89 has a terminal Sb connected through a 10-counter 90 to a terminal Rb of the third switch 93. The second switch 89 has a terminal Sc connected through a 100-counter 91 to a terminal Rc of the third switch 93. The second switch 89 has a terminal Sd connected through a 1000-counter 92 to a terminal Rd of the third switch 93. A terminal Re of the third switch 93 produces a signal corresponding to one frame period.

When the input video source has a frame rate 23.976 Hz, the first switch 88 has its terminal Ti connected to terminal Ta, the second switch 89 has its terminal Se connected to terminal Sd, and the third switch 93 has its terminal Re connected to terminal Rd. Therefore, in the case where the frame rate is 23.976 Hz, one thousand clocks of the clock having a frequency 23976 Hz are counted in 1000-counter 92 to measure one frame period. After counting one thousand clocks, a signal representing one frame period is produced from terminal Re of the third switch 93.

When the input video source has a frame rate 24 Hz, the first switch 88 has its terminal Ti connected to terminal Tb, the second switch 89 has its terminal Se connected to terminal Sa, and the third switch 93 has its terminal Re connected to terminal Ra. Therefore, in the case where the frame rate is 24 Hz, one clock of the clock having a frequency 24 Hz is counted to measure one frame period. After counting one clock, a signal representing one frame period is produced from terminal Re of the third switch 93.

As understood from the above, the first switch 88 is switched according to the frame rate of the input video source, and the second and third switches 89 and 93 are switched according to the number of decimal places after the decimal point. In the second and third switches 89 and 93, the terminals Sa and Ra, respectively, are connected when the frame rate has no decimal place; the terminals Sb and Rb, respectively, are connected when the frame rate has up to tenth's decimal place; the terminals Sc and Rc, respectively, are connected when the frame rate has up to hundredth's decimal place; and the terminals Sd and Rd, respectively, are connected when the frame rate has up to thousandth's decimal place.

When the circuit of Fig. 9 is constructed by a computer, counting clocks of 23976 Hz, 24 Hz, 25 Hz, 2997 Hz, 30 Hz, 50 Hz, 5997 Hz and 60 Hz can be done by the use of 15-bit data, 5-bit data, 5-bit data, 12-bit data, 5-bit data, 6-bit data, 13-bit data, 6-bit data, respectively. In other words, in order to express the time code, 15-bit data is sufficient. Also, it is possible to adjust the number of necessary bits in accordance with different frame rates.

The effect of this invention is to enable video object planes from different video sources encoded by different encoders to be multiplexed. It provides an effective and flexible time stamping technique for synchronising different video/audio sources with different frame rates. The use of the time increment resolution enables the representation of frame rates that have frame periods that are not integer number of milliseconds. The following table shows the frequently used frame rates that can be represented.

**Table 4**

| Frame Rate | Frame period | Can be coded using the prior art | Can be coded using the current invention | Time increment resolution used. (clocks in 1 second) | Time increment for 1 frame interval |
|---|---|---|---|---|---|
| 23.976 Hz | 41.70837504171 ms | No | Yes | 23976 | 1000 |
| 24 Hz | 41.66666666667 ms | No | Yes | 24 | 1 |
| 25 Hz | 40.0 ms | Yes | Yes | 25 | 1 |
| 29.97 Hz | 33.36670003337 ms | No | Yes | 2997 | 100 |
| 30 Hz | 33.33333333333 ms | No | Yes | 30 | 1 |
| 50 Hz | 20.0 ms | Yes | Yes | 50 | 1 |
| 59.97 Hz | 16.67500416875 ms | No | Yes | 5997 | 100 |
| 60 Hz | 16.66666666667 ms | No | Yes | 60 | 1 |

Table 4 shows a combination of time increment resolution and time increment that can be used to represent frequently use frame rates. As apparent from Table 4, it is possible according to the present invention, to code the frame rates that were not possible in the prior art.

The present disclosure relates to subject matter contained in priority Japanese Patent Application No. HEI 10-362511, filed on December 21, 1998, the contents of which are herein expressly incorporated by reference in its entirety.

## Claims

1. An apparatus of encoding the coded representation of the presentation time of an audio visual sequence with a dynamic range of time base resolution comprising:
means for obtaining the instances of the audio visual sequence by temporal sampling;
means for determining the local time base of the said instances of the audio visual sequence to be encoded into compressed data;
means for encoding the said local time based in three parts comprising of a modulo time base that marks the occurrence of a set of evenly spaced time references of fixed interval on the local time base, a time increment resolution that gives the total number of clocks within the said fixed interval and a time increment in units of clocks relative to the occurrence of the time references;
means for inserting the coded representation of the time increment resolution at the beginning of the audio visual sequence;
means for inserting the coded representation of the modulo time base into the compressed data of the said instances of the audio visual sequence whenever one or more fixed interval have elapsed; and
means for inserting the coded representation of the time base within the compressed data of the said instances of the audio visual sequence.

2. An apparatus of decoding the coded representation of the presentation time of an audio visual sequence with a dynamic range of time base resolution comprising:
means for decoding the said local time based in three parts comprising of a modulo time base that marks the occurrence of a set of evenly spaced time references of fixed interval on the local time base, a time increment resolution that gives the total number of clocks within the said fixed interval and a time increment in units of clocks relative to the occurrence of the time references;
means for extracting the coded representation of the time increment resolution at the beginning of the audio visual sequence;
means for calculating the duration of one frame from the time increment resolution;
means for extracting the coded representation of the modulo time base from the compressed data of the said instances of the audio visual sequence and incrementing the time base by the appropriate number of fixed intervals that have elapsed;
means for extracting the coded representation of the time base increment within the compressed data of the said instances of the audio visual sequence and multiplying it by the duration of one frame to obtain the time base increment of the instance of the audio visual sequence relative to the time base; and
means for adding the time base increment to the time base to obtain the local time base of the instance of the audio visual sequence.

3. An apparatus of encoding according to claim 1, further comprising means for inserting the coded representation of the time code of the encoder time base at the beginning of the audio visual sequence.

4. An apparatus of encoding according to claim 1, wherein said modulo time base comprises a series of consecutive "1" followed by a "0" whereby each "1" indicates the number of fixed intervals that has elapsed since the last synchronization point marked.

5. An apparatus of encoding according to claim 1 wherein said time increment comprises an unsigned binary integer whereby the length of the integer is the minimum number of binary bits necessary to represent the maximum number of clocks given by the time base increment resolution.

6. An apparatus of encoding according to claim 1, wherein said modulo time base has a fixed interval of 1 second interval.

7. An apparatus of decoding according to claim 2, further comprising means for extracting the coded representation of the time code of the encoder time base from the beginning of the audio visual sequence and using it to derive the local time base of the decoder.

8. An apparatus of decoding according to claim 2, wherein said modulo time base comprises a series of consecutive "1" followed by a "0" whereby each "1" indicates the number of fixed intervals that has elapsed since the last synchronization point marked.

9. An apparatus of decoding according to claim 2 wherein said time increment comprises an unsigned binary integer whereby the length of the integer is the minimum number of binary bits necessary to represent the maximum number of clocks given by the time base increment resolution.

10. An apparatus of decoding according to claim 2, wherein said modulo time base has a fixed interval of 1 second interval.

11. A method of encoding the coded representation of the presentation time of an audio visual sequence with a dynamic range of time base resolution comprising the steps of:
obtaining the instances of the audio visual sequence by temporal sampling;
determining the local time base of the said instances of the audio visual sequence to be encoded into compressed data;
encoding the said local time based in three parts comprising of a modulo time base that marks the occurrence of a set of evenly spaced time references of fixed interval on the local time base, a time increment resolution that gives the total number of clocks within the said fixed interval and a time increment in units of clocks relative to the occurrence of the time references;
inserting the coded representation of the time increment resolution at the beginning of the audio visual sequence;
inserting the coded representation of the modulo time base into the compressed data of the said instances of the audio visual sequence whenever one or more fixed interval have elapsed; and
inserting the coded representation of the time base within the compressed data of the said instances of the audio visual sequence.

12. A method of decoding the coded representation of the presentation time of an audio visual sequence with a dynamic range of time base resolution comprising the steps of:
decoding the said local time based in three parts comprising of a modulo time base that marks the occurrence of a set of evenly spaced time references of fixed interval on the local time base, a time increment resolution that gives the total number of clocks within the said fixed interval and a time increment in units of clocks relative to the occurrence of the time references;
extracting the coded representation of the time increment resolution at the beginning of the audio visual sequence;
calculating the duration of one frame from the time increment resolution;
extracting the coded representation of the modulo time base from the compressed data of the said instances of the audio visual sequence and incrementing the time base by the appropriate number of fixed intervals that have elapsed;
extracting the coded representation of the time base increment within the compressed data of the said instances of the audio visual sequence and multiplying it by the duration of one frame to obtain the time base increment of the instance of the audio visual sequence relative to the time base; and
adding the time base increment to the time base to obtain the local time base of the instance of the audio visual sequence.

13. A method of encoding according to claim 11, further comprising the step of inserting the coded representation of the time code of the encoder time base at the beginning of the audio visual sequence.

14. A method of encoding according to claim 11, wherein said modulo time base comprises a series of consecutive "1" followed by a "0" whereby each "1" indicates the number of fixed intervals that has elapsed since the last synchronization point marked.

15. A method of encoding according to claim 11 wherein said time increment comprises an unsigned binary integer whereby the length of the integer is the minimum number of binary bits necessary to represent the maximum number of clocks given by the time base increment resolution.

16. A method of encoding according to claim 11, wherein said modulo time base has a fixed interval of 1 second interval.

17. A method of decoding according to claim 12, further comprising the step of extracting the coded representation of the time code of the encoder time base from the beginning of the audio visual sequence and using it to derive the local time base of the decoder.

18. A method of decoding according to claim 12, wherein said modulo time base comprises a series of consecutive "1" followed by a "0" whereby each "1" indicates the number of fixed intervals that has elapsed since the last synchronization point marked.

19. A method of decoding according to claim 12 wherein said time increment comprises an unsigned binary integer whereby the length of the integer is the minimum number of binary bits necessary to represent the maximum number of clocks given by the time base increment resolution.

20. A method of decoding according to claim 12, wherein said modulo time base has a fixed interval of 1 second interval.
